# EUROPEAN PATENT SPECIFICATION

(11) **EP 4 007 256 B1**
(45) Date of publication and mention of the grant of the patent: **28.06.2023**
(21) Application number: 20849217.3
(22) Date of filing: 05.08.2020
(51) Int. Cl.: H04N 23/50, H04N 23/57, F16M 11/08, F16M 11/18, F16M 13/02

(54) **CAMERA ASSEMBLY AND ELECTRONIC DEVICE**
KAMERAEINHEIT UND ELEKTRONISCHE VORRICHTUNG
ENSEMBLE CAMÉRA ET DISPOSITIF ÉLECTRONIQUE

(30) Priority: 08.08.2019 CN 201910731432
(43) Date of publication of application: 01.06.2022
(73) Proprietor: Honor Device Co., Ltd., Shenzhen, Guangdong 518040 (CN)
(72) Inventor: XIA, Honghua, Shenzhen, Guangdong 518129 (CN); YUAN, Danhui, Shenzhen, Guangdong 518129 (CN)
(74) Representative: Roth, Sebastian
(86) International application number: PCT/CN2020/107062
(87) International publication number: WO 2021/023214

(56) References cited:
- CN-A- 108 600 596
- CN-A- 109 495 677
- CN-A- 109 788 683
- CN-A- 111 131 673
- CN-U- 207 099 131
- CN-U- 210 246 878
- JP-A- 2016 206 571

## Description

### TECHNICAL FIELD

Embodiments of this application relate to the technical field of machinery, and more specifically, to a camera assembly and an electronic device.

### BACKGROUND

As a large-screen device develops, adding a camera to the large-screen device becomes a development trend. In the industry, a camera is added to large-screen devices such as a smart television, a laptop, and a display.

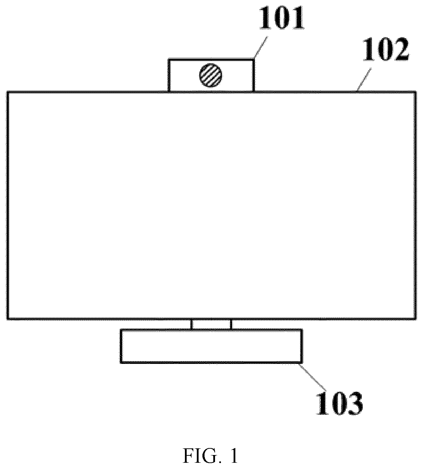

FIG. 1 is a schematic diagram of a display in the prior art, the display includes a camera 101, a display screen 102, and a support 103. The camera 101 is fixed to an upper surface of the display screen 102. The support 103 is configured to support the display screen 102.

At present, cameras are directly fixed to all large-screen devices in the market, as shown in FIG. 1. Photographing angles of the cameras fixed to the large-screen devices cannot be changed. In addition, the cameras are still exposed to the outside on the large-screen devices when not used by a user. Appearances are inaesthetic, and damage is easily caused to the cameras.

### SUMMARY

Embodiments of this application provide a camera assembly and an electronic device. The camera assembly can lift a camera, and adjust the photographing angle of the camera. A camera assembly and an electronic device according to the invention are set out in claims 1-9.

The embodiments of this application are implemented as follows:
In a first aspect, an embodiment of this application provides a camera assembly. The camera assembly is disposed on an electronic device. The camera assembly includes a camera module, a push block, an elastic component, a transmission rod, a transmission mechanism, a transmission shaft, and a limiting block. A first end of the transmission rod is connected to the transmission mechanism. A second end of the transmission rod is connected to a first end of the push block by the elastic component. A second end of the push block is configured for contact with the camera module. A first through hole is provided in the transmission rod. A first thread is arranged in the first through hole. A first end of the transmission shaft is fixedly connected to the camera module. A second end of the transmission shaft penetrates the first through hole in the transmission rod. A second thread is arranged on the transmission shaft. The second thread on the transmission shaft matches the first thread in the first through hole in the transmission rod. The transmission mechanism is configured to drive the transmission rod to move from a first position to a second position in a preset direction. The transmission rod is configured to drive the push block to move in the preset direction, until the push block comes into contact with the limiting block fixed to the electronic device, and drive the camera module to move in the preset direction by using the elastic component and the push block. The transmission mechanism is configured to drive the transmission rod to move from the second position to a third position in the preset direction. The transmission rod is configured to drive the transmission shaft to rotate under the influence of the sum of the gravity of the camera module and the transmission shaft. The transmission shaft is configured to drive the camera module to rotate.

In the first aspect, the camera assembly provided in this embodiment of this application can lift a camera and adjust the photographing angle of the camera. By using one transmission mechanism, the camera module can be moved in the preset direction, and can be rotated clockwise or counterclockwise. When the camera assembly includes only one transmission mechanism, the camera module can be first linearly moved and then rotated. Therefore, a quantity of transmission mechanisms in the camera assembly can be reduced, thereby saving a space for the electronic device.
In a possible implementation, a second through hole is provided in the push block. The second end of the transmission shaft penetrates the second through hole in the push block and the first through hole in the transmission rod. In a process in which the transmission rod drives the push block to move in the preset direction, the push block can be ensured to surround the transmission shaft, so that the push block can more stably drive the camera module to move in the preset direction.

In a possible implementation, the camera assembly further includes a baffle. The second end of the transmission shaft is fixedly connected to the baffle. The transmission rod is located between the push block and the baffle. When the camera module is located outside the electronic device, if a user is manually taking out the camera module, the baffle on a tail end of the transmission shaft comes into contact with the transmission rod, so that the camera module cannot further extend outward. In this way, the camera module can be prevented from being manually taken out by the user.

In a possible implementation, the camera assembly further includes a guide rail fixed to the electronic device. The guide rail matches the camera module. When the transmission rod is located between a first position and a second position, the guide rail comes into contact with the camera module. When the transmission rod is located between the second position and a third position, the guide rail is separated from the camera module. During the movement of the camera module from inside of the electronic device to outside of the electronic device in the preset direction, the guide rail can ensure that the camera module is always moved in the preset direction, so that the camera module is prevented from being moved in other directions by an external force.

In a possible implementation, the elastic component is a spring.

In a possible implementation, the transmission mechanism includes a motor, a gear assembly, and a screw rod. A rotary shaft of the motor is connected to the screw rod by the gear assembly. A third through hole is further provided in the transmission rod. The screw rod penetrates the third through hole in the transmission rod. A third thread is arranged in the third through hole in the transmission rod. A fourth thread is arranged on the screw rod. The third thread in the third through hole in the transmission rod matches the fourth thread on the screw rod.

In a possible implementation, the transmission mechanism further includes a limiting shaft and a support. The support is fixed to the electronic device. The limiting shaft is fixed to the support. A fourth through hole is further provided in the transmission rod. The limiting shaft penetrates the fourth through hole in the transmission rod. During movement the transmission rod, the movement of the transmission rod is always limited in a predetermined track by the limiting shaft, so that the movement of the transmission rod does not deviate.

In a possible implementation, the gear assembly includes a first gear, a second gear, a third gear, and a fourth gear. The first gear is disposed on the rotary shaft of the motor. The second gear is disposed on a first end of the screw rod. The first gear is meshed with the third gear. The third gear is meshed with the fourth gear. The fourth gear is meshed with the second gear.

In a second aspect, an embodiment of this application provides a camera assembly. The camera assembly is disposed on an electronic device. The camera assembly includes a camera module, a transmission shaft, a transmission rod, a transmission mechanism, and a rotary mechanism. A first end of the transmission rod is connected to the transmission mechanism. A second end of the transmission rod is connected to the rotary mechanism. A first end of the transmission shaft is fixedly connected to the camera module. A second end of the transmission shaft is connected to the rotary mechanism. The transmission mechanism is configured to drive the transmission rod to move from a first position to a second position in a preset direction. The transmission rod is configured to drive the rotary mechanism, the transmission shaft, and the camera module to move in the preset direction. The rotary mechanism is configured to drive the camera module to rotate by using the transmission shaft.

In the second aspect, according to this embodiment of this application, by using the transmission mechanism, the camera module can be moved in the preset direction, and by using the rotary mechanism, the camera module can be rotated clockwise or counterclockwise.

In a possible implementation, the camera assembly further includes a connecting rod. The second end of the transmission rod is connected to the rotary mechanism by the connecting rod. A first through hole is provided in the transmission rod. The second end of the transmission shaft penetrates the first through hole in the transmission rod to be connected to the rotary mechanism.

In a possible implementation, the camera assembly further includes a guide rail fixed to the electronic device. The guide rail matches the camera module. When the transmission rod is located between a first position and a second position, the guide rail comes into contact with the camera module. When the transmission rod is at the second position, the guide rail is separated from the camera module.

In a possible implementation, the transmission mechanism includes a first motor, a first gear assembly, and a screw rod. A rotary shaft of the first motor is connected to the screw rod by the first gear assembly. A second through hole is further provided in the transmission rod. The screw rod penetrates the second through hole in the transmission rod. A first thread is arranged in the second through hole in the transmission rod. A second thread is arranged on the screw rod. The first thread in the second through hole in the transmission rod matches the second thread on the screw rod.

In a possible implementation, the transmission mechanism further includes a limiting shaft and a first support. The first support is fixed to the electronic device. The limiting shaft is fixed to the first support. A third through hole is further provided in the transmission rod. The limiting shaft penetrates the third through hole in the transmission rod.

In a possible implementation, the first gear assembly includes a first gear and a second gear. The first gear is disposed on the rotary shaft of the first motor. The second gear is disposed on a first end of the screw rod. The first gear is meshed with the second gear.

In a possible implementation, the rotary mechanism includes a second motor, a second gear assembly, and a second support. The second motor is fixed to the second support, and the second support is fixed to the transmission rod. A rotary shaft of the second motor is connected to the second end of the transmission shaft by the second gear assembly.

In a third aspect, an embodiment of this application provides an electronic device. The electronic device includes the camera assembly disclosed in the first aspect and any of possible implementations of the first aspect.

In a fourth aspect, an embodiment of this application provides an electronic device. The electronic device includes the camera assembly disclosed in the second aspect and any of possible implementations of the second aspect.

In a fifth aspect, an embodiment of this application provides an electronic device. The electronic device includes a display screen, a support, and a camera assembly. The display screen is connected to the support. The camera assembly is disposed inside the display screen. The camera assembly includes a camera module, a push block, a spring, a transmission rod, a transmission mechanism, a transmission shaft, a limiting block, a baffle, and a guide rail. A first end of the transmission rod is connected to the transmission mechanism. A second end of the transmission rod is connected to a first end of the push block by the spring. A first through hole is provided in the transmission rod. A first thread is arranged in the first through hole. A second end of the push block is configured for contact with the camera module. A second through hole is provided in the push block. A first end of the transmission shaft is fixedly connected to the camera module. A second end of the transmission shaft penetrates the second through hole in the push block and the first through hole in the transmission rod. The second end of the transmission shaft is fixedly connected to the baffle. The transmission rod is located between the push block and the baffle. A second thread is arranged on the transmission shaft. The second thread on the transmission shaft matches the first thread in the first through hole in the transmission rod. The transmission mechanism is configured to drive the transmission rod to move from a first position to a second position in a preset direction. The transmission rod is configured to drive the push block to move in the preset direction, until the push block comes into contact with the limiting block disposed on the display screen, and drive the camera module to move in the preset direction by using the spring and the push block. The transmission mechanism is configured to drive the transmission rod to move from the second position to a third position in the preset direction. The transmission rod is configured to drive the transmission shaft to rotate under the action of the spring. The transmission shaft is configured to drive the camera module to rotate. The guide rail is fixed to the display screen and matches the camera module. When the transmission rod is located between the first position and the second position, the guide rail comes into contact with the camera module. When the transmission rod is located between the second position and a third position, the guide rail is separated from the camera module.

### BRIEF DESCRIPTION OF DRAWINGS

FIG. 1 is a schematic diagram of a display in the prior art;
FIG. 2 is a schematic diagram of a camera assembly 10 according to an embodiment of this application;
FIG. 3 is a schematic diagram of the camera assembly 10 in a first state according to an embodiment of this application;
FIG. 4 is a schematic diagram of the camera assembly 10 in a second state according to an embodiment of this application;
FIG. 5 is a schematic diagram of the camera assembly 10 in a third state according to an embodiment of this application;
FIG. 6 is a schematic diagram of another camera assembly 10 according to an embodiment of this application;
FIG. 7 is a schematic diagram of partial components of the camera assembly 10 in FIG. 6;
FIG. 8 is a schematic diagram of a transmission mechanism 16 according to an embodiment of this application;
FIG. 9 is a perspective view of a transmission mechanism 16 according to an embodiment of this application;
FIG. 10 is a schematic diagram of a camera assembly 30 according to an embodiment of this application;
FIG. 11 is a schematic diagram of the camera assembly 30 in a first state according to an embodiment of this application;
FIG. 12 is a schematic diagram of the camera assembly 30 in a second state according to an embodiment of this application;
FIG. 13 is a schematic diagram of the camera assembly 30 in a third state according to an embodiment of this application;
FIG. 14 is a schematic diagram of a rotary mechanism 36 of a camera assembly 30 according to an embodiment of this application;
FIG. 15 is a schematic diagram of an electronic device 400 in a first state according to an embodiment of this application;
FIG. 16 is a schematic diagram of the electronic device 400 in a second state according to an embodiment of this application; and
FIG. 17 is a schematic diagram of the electronic device 400 in a third state according to an embodiment of this application.

### DESCRIPTION OF EMBODIMENTS

Technical solutions in embodiments of this application are described below with reference to the accompanying drawings in the embodiments of this application.

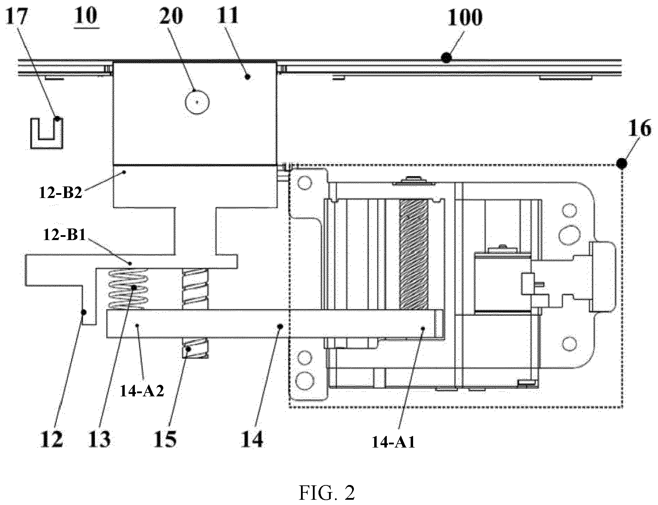

FIG. 2 is a schematic diagram of a camera assembly 10 according to an embodiment of this application. The camera assembly 10 is applicable to an electronic device 100. The electronic device 100 may be a large-screen device, a small-screen device, or a screenless device. For example, the large-screen device may be a device such as a smart television, a display, or a laptop, the small-screen device may be a device such as a smart phone or a tablet, and the screenless device may be a device such as a smart camera.
In the embodiment shown in FIG. 2, the camera assembly 10 includes a camera module 11, a push block 12, an elastic component 13, a transmission rod 14, a transmission shaft 15, a transmission mechanism 16, and a limiting block 17. A camera 20 is disposed in the camera module 11. A first end 14-A1 of the transmission rod 14 is connected to the transmission mechanism 16. A second end 14-A2 of the transmission rod 14 is connected to a first end 12-B 1 of the push block 12 by the elastic component 13. A second end 12-B2 of the push block 12 is configured for contact with the camera module 11. A first through hole is provided in the transmission rod 14. A first thread is arranged in the first through hole. A first end of the transmission shaft 15 is fixedly connected to the camera module 11. A second end of the transmission shaft 15 penetrates the first through hole in the transmission rod 14. A second thread is arranged on the transmission shaft 15. The second thread on the transmission shaft 15 matches the first thread in the first through hole in the transmission rod 14. In addition, the elastic component 13 may be a spring.

In the embodiment shown in FIG. 2, after the transmission mechanism 16 drives the transmission rod 14 to move from a first position to a second position in a preset direction, the transmission rod 14 drives the push block 12 to move in the preset direction, until the push block comes into contact with the limiting block 17 fixed to the electronic device 100, and drives the camera module 11 to move in the preset direction by using the elastic component 13 and the push block 12. After the transmission mechanism 16 drives the transmission rod 14 to move from the second position to a third position in the preset direction, the transmission rod 14 drives the transmission shaft 15 to rotate under the action of the elastic component 13, and the transmission shaft 15 drives the camera module 11 to rotate.

In the embodiment shown in FIG. 2, the transmission mechanism 16 may also drive the transmission rod 14 to move from the third position to the second position in a direction opposite to the preset direction, and may also drive the transmission rod 14 to move from the second position to the first position in the direction opposite to the preset direction. The preset direction and the direction opposite to the preset direction are directions in which the transmission rod 14 may be moved.

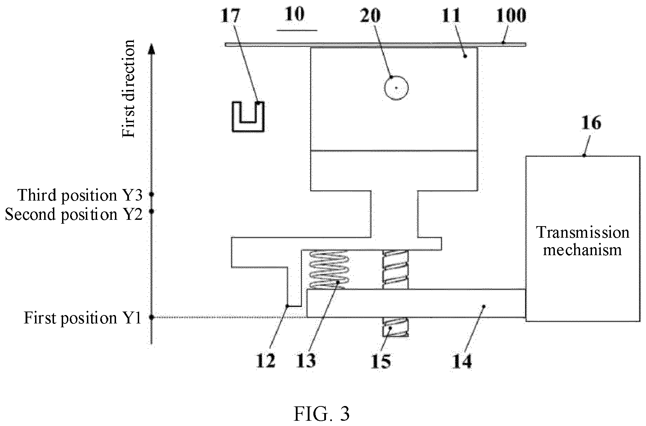

FIG. 3 is a schematic diagram of a camera assembly 10 in a first state according to an embodiment of this application. The first state of the camera assembly 10 shown in FIG. 3 is a state in which the transmission rod 14 of the camera assembly 10 is at a first position Y1. A first direction shown in FIG. 3 is the preset direction mentioned in the embodiment shown in FIG. 2.

In the embodiment shown in FIG. 3, it is assumed that a driving force of the transmission mechanism 16 in the first direction is F 1, an initial elastic force of the elastic component 13 is F2, a sum of gravity of the camera module 11, the push block 12, and the transmission shaft 15 is F3, and a sum of the gravity of the camera module 11, the push block 12, the elastic component 13, the transmission rod 14, and the transmission shaft 15 is F4. In this embodiment of this application, F1 > F4 and F1 > F2 > F3 are preset. In addition, the first direction in FIG. 3 is a direction from the transmission rod 14 to the camera module 11.

In the embodiment shown in FIG. 3, since F1 > F4, the transmission mechanism 16 may drive the transmission rod 14 to move from the first position Y1 to a second position Y2 in the first direction, and the transmission rod 14 may drive the camera module 11, the push block 12, the elastic component 13, and the transmission shaft 15 to move in the first direction. In a process in which the transmission rod 14 drives the camera module 11, the push block 12, the elastic component 13, and the transmission shaft 15 to move in the first direction, since F1 > F2 > F3, the elastic component 13 is free of elastic deformation.

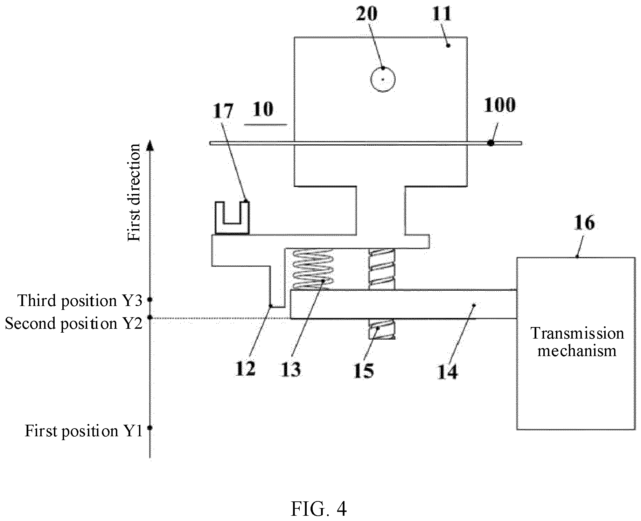

FIG. 4 is a schematic diagram of the camera assembly 10 in a second state according to an embodiment of this application. The second state of the camera assembly 10 shown in FIG. 4 is a state in which the transmission rod 14 of the camera assembly 10 is at the second position Y2. A first direction shown in FIG. 4 is the preset direction mentioned in the embodiment shown in FIG. 2.

In the embodiment shown in FIG. 4, when the transmission mechanism 16 drives the transmission rod 14 to move from the first position Y1 to the second position Y2 in the first direction, the transmission rod 14 drives the camera module 11 to move from inside of the electronic device 100 to outside of the electronic device 100 in the first direction by using the elastic component 13 and the push block 12, and the transmission rod 14 drives the push block 12 to move in the first direction, until the push block comes into contact with the limiting block 17 fixed to the electronic device 100 and then enters a stationary state.

In the embodiment shown in FIG. 4, when the transmission rod 14 is at the second position Y2, the camera module 11 is moved from the inside of the electronic device 100 to the outside of the electronic device 100, so that the camera 20 inside the camera module 11 can perform photographing.

In the embodiment shown in FIG. 4, when the transmission rod 14 is at the second position Y2, since the push block 12 is moved to a position in contact with the limiting block 17, the push block 12 cannot be further moved in the first direction under blocking by the limiting block 17.

In the embodiment shown in FIG. 4, when the transmission rod 14 is at the second position Y2, the elastic component 13 is in an uncompressed state, so that the elastic component 13 is not elastically deformed.

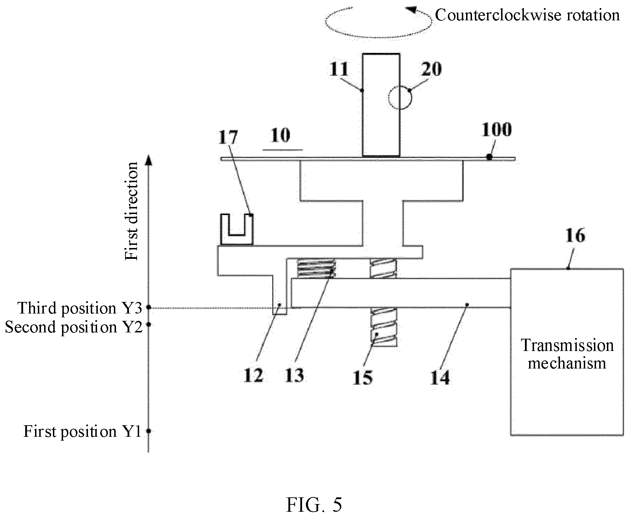

FIG. 5 is a schematic diagram of the camera assembly 10 in a third state according to an embodiment of this application. The third state of the camera assembly 10 shown in FIG. 5 is a state in which the transmission rod 14 of the camera assembly 10 is at a third position Y3. A first direction shown in FIG. 5 is the preset direction mentioned in the embodiment shown in FIG. 2.

In the embodiment shown in FIG. 5, when the transmission mechanism 16 drives the transmission rod 14 to move from the second position Y2 to the third position Y3 in the first direction, the elastic component 13 is squeezed into elastic deformation by the transmission rod 14 being moved in the first direction and the push block 12 in the stationary state. The transmission shaft 15 drives the camera module 11 to rotate counterclockwise through mating between the first thread and the second thread.

In the embodiment shown in FIG. 5, in a process in which the transmission mechanism 16 drives the transmission rod 14 to move from the second position Y2 to the third position Y3 in the first direction, since the push block 12 is in the stationary state, and the driving force F1 of the transmission mechanism 16 in the first direction is greater than the initial elastic force F2 of the elastic component 13, that is F1 > F2, the elastic component 13 is continuously squeezed into elastic deformation by the push block 12 in the stationary state and the transmission rod 14 being moved in the first direction.

In the embodiment shown in FIG. 5, it is assumed that a sum of the gravity of the camera module 11 and the transmission shaft 15 is F5, a frictional force between the second thread on the transmission shaft 15 and the first thread in the first through hole in the transmission rod 14 is F6, and F5 > F6. After the elastic component 13 is squeezed into elastic deformation, since the sum of the gravity F5 of the camera module 11 and the transmission shaft 15 is greater than the frictional force F6 between the first thread and the second thread, the transmission shaft 15 starts to be rotated counterclockwise through the mating between the first thread and the second thread. At the same time, the transmission shaft 15 drives the camera module 11 to rotate counterclockwise. In this case, the camera 20 in the camera module 11 can be rotated to different angles for photographing.

In the embodiment shown in FIG. 5, it is assumed that the camera module 11 is rotated counterclockwise by 90 degrees after the transmission mechanism 16 drives the transmission rod 14 to move from the second position Y2 to the third position Y3 in the first direction. Certainly, in this embodiment of this application, widths and directions of the second thread on the transmission shaft 15 and the first thread in the first through hole in the transmission rod 14 may be adjusted to adjust a rotation direction and rotation angle of the camera module 11. For example, the widths and the directions of the first thread and the second thread may be adjusted, so that the camera module 11 can also be rotated clockwise by a predetermined angle, for example, 180 degrees, 270 degrees, or 360 degrees.

It may be learned from the embodiments shown in FIG. 3 and FIG. 4 that, in the process in which the transmission mechanism 16 drives the transmission rod 14 to move from the first position Y1 to the second position Y2 in the first direction, the elastic component 13 is not elastically deformed, and the transmission rod 14 stably drives the camera module 11, the push block 12, the elastic component 13, and the transmission shaft 15 to simultaneously move in the first direction, so that the camera module 11 is moved from the inside of the electronic device 100 to the outside of the electronic device 100.

It may be learned from the embodiments shown in FIG. 4 and FIG. 5 that, in the process in which the transmission mechanism 16 drives the transmission rod 14 to move from the second position Y2 to the third position Y3 in the first direction, the push block 12 comes into contact with the limiting block 17 and then enters the stationary state, and the elastic component 13 is squeezed into elastic deformation by the push block 12 and the transmission rod 14 jointly. In this case, the transmission shaft 15 is affected by the downward gravity F5 of the camera module 11 and the transmission shaft 15 and the upward frictional force F6 between the first thread and the second thread. Since F5 > F6 is preset in this embodiment of this application, the transmission shaft 15 is rotated counterclockwise in the first through hole in the transmission rod 14 through the mating between the first thread and the second thread, and the transmission shaft 15 drives the camera module 11 to rotate counterclockwise outside the electronic device 100, so that the camera 20 in the camera module 11 can be rotated to different angles for photographing.

It may be learned from the embodiments shown in FIG. 3 and FIG. 5 that, subtlety of this embodiment of this application is "one for two uses". "One" means one transmission mechanism 16, and "two uses" means that the camera module 11 may be first linearly moved in the first direction and then rotated clockwise or counterclockwise. In other words, in this embodiment of this application, the camera module 11 can be moved from the inside of the electronic device 100 to the outside of the electronic device 100 by using only one transmission mechanism 16, and can be rotated clockwise or counterclockwise outside the electronic device 100. In this embodiment of this application, components are not simply piled up. Instead, a connection relationship and a position relationship among the components such as the push block 12, the elastic component 13, the transmission rod 14, the transmission shaft 15, and the limiting block 17 are subtly designed, and a force on each component is properly designed. In this way, when the camera assembly 10 includes only one transmission mechanism 16, the camera module 11 can be first linearly moved and then rotated. Therefore, a quantity of transmission mechanisms in the camera assembly 10 can be reduced, so that a space is saved for the electronic device 100.

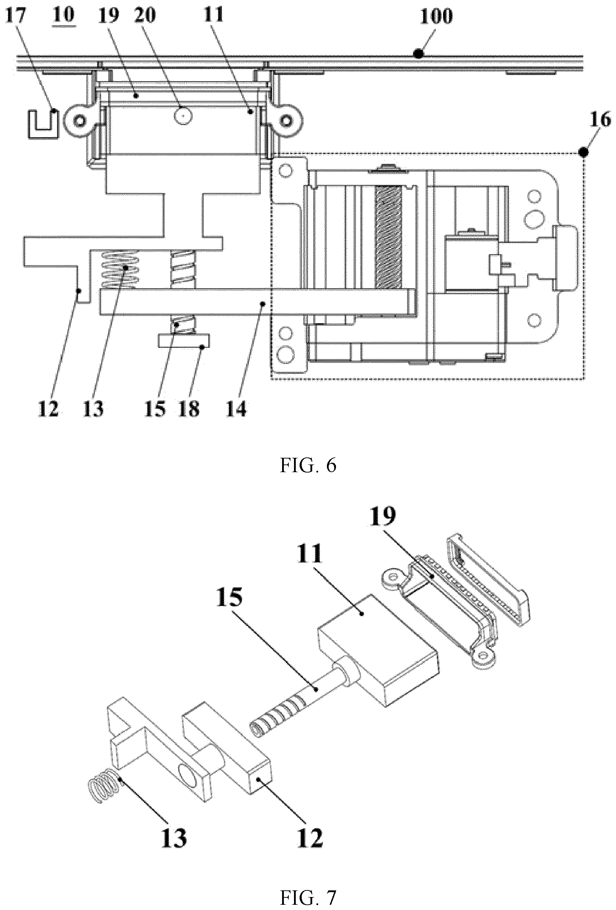

FIG. 6 is a schematic diagram of another camera assembly 10 according to an embodiment of this application. The camera assembly 10 shown in FIG. 6 is an optimization based on the embodiment shown in FIG. 2.

In an embodiment shown in FIG. 6, the camera assembly 10 includes a camera module 11, a push block 12, an elastic component 13, a transmission rod 14, a transmission shaft 15, a transmission mechanism 16, and a limiting block 17. For detailed description of the camera module 11, the push block 12, the elastic component 13, the transmission rod 14, the transmission shaft 15, the transmission mechanism 16, and the limiting block 17, refer to the embodiment shown in FIG. 2.

A difference between the embodiment shown in FIG. 6 and the embodiment shown in FIG. 2 lies in that a second through hole is provided in the push block 12. A second end of the transmission shaft 15 penetrates the second through hole in the push block 12 and the first through hole in the transmission rod 14. A function of the second through hole in the push block 12 is to ensure that the push block 12 can surround the transmission shaft 15 in the process in which the transmission rod 14 drives the push block 12 to move in the first direction, so that the push block 12 more stably drives the camera module 11 to move in the first direction.

Another difference between the embodiment shown in FIG. 6 and the embodiment shown in FIG. 2 lies in that the camera assembly 10 may further include a baffle 18. The transmission shaft 15 may penetrate the second through hole in the push block 12 and the first through hole in the transmission rod 14 to be fixedly connected to the baffle 18. The transmission rod 14 is located between the push block 12 and the baffle 18. A function of the baffle 18 is as follows. When the camera module 11 is located outside the electronic device 100, if a user is manually taking out the camera module 11, the baffle 18 on a tail end of the transmission shaft 15 comes into contact with the transmission rod 14, so that the camera module 11 cannot further extend outward. In this way, the camera module 11 can be prevented from being manually taken out by the user.

Still another difference between the embodiment shown in FIG. 6 and the embodiment shown in FIG. 2 lies in that the camera assembly 10 may further includes a guide rail 19. The guide rail 19 is fixed to the electronic device 100 and matches the camera module 11. When the transmission rod 14 is located between a first position and a second position, the guide rail 19 comes into contact with the camera module 11. When the transmission rod 14 is located between the second position and a third position, the guide rail 19 is separated from the camera module 11. The camera module 11 is slid on the guide rail 19 during movement from the inside of the electronic device 100 to the outside of the electronic device 100 in the first direction. A function of the guide rail 19 is as follows. During the movement of the camera module 11 from inside of the electronic device 100 to outside of the electronic device 100 in the first direction, the guide rail 19 can ensure that the camera module 11 is always moved in the first direction, so that the camera module 11 is prevented from being moved in other directions by an external force.

FIG. 7 is a schematic diagram of partial components of the camera assembly 10 in FIG. 6. FIG. 7 shows a camera module 11, a push block 12, an elastic component 13, a transmission shaft 15, and a guide rail 19. FIG. 7 is intended to show the partial components of the camera assembly 10 more clearly.

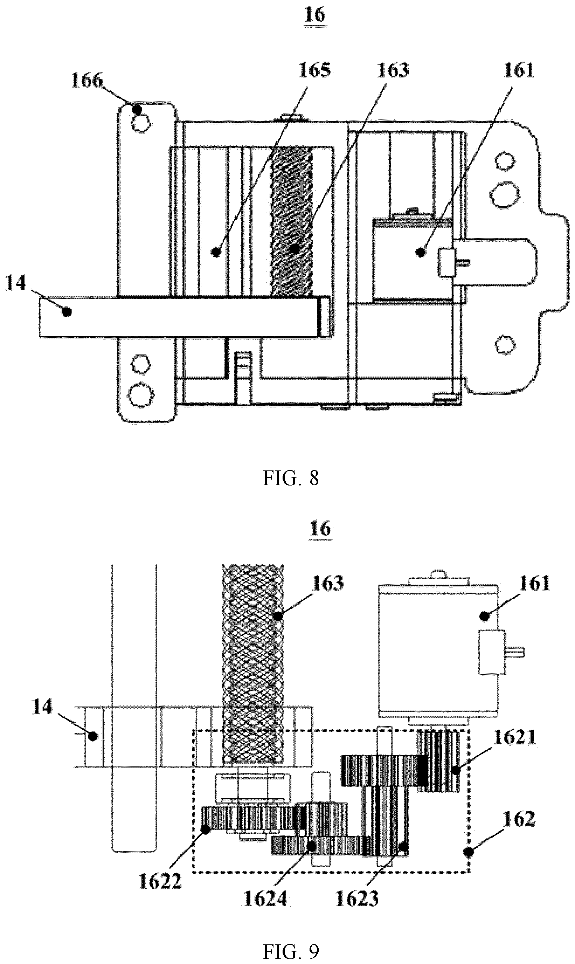

FIG. 8 is a schematic diagram of a transmission mechanism 16 according to an embodiment of this application, and FIG. 9 is a perspective view of the transmission mechanism 16 according to an embodiment of this application.

In embodiments shown in FIG. 8 and FIG. 9, the transmission mechanism 16 includes a motor 161, a gear assembly 162, and a screw rod 163. A rotary shaft of the motor 161 is connected to the screw rod 163 by the gear assembly 162. A third through hole is further provided in the transmission rod 14. The screw rod 163 penetrates the third through hole in the transmission rod 14. A third thread is arranged in the third through hole in the transmission rod 14. A fourth thread is arranged on the screw rod 163. The third thread in the third through hole in the transmission rod 14 matches the fourth thread on the screw rod 163.

In the embodiments shown in FIG. 8 and FIG. 9, the motor 161 starts to rotate when receiving an electrical signal, so that a gear in the gear assembly 162 is driven to rotate, and the gear assembly 162 drives the screw rod 163 to rotate. After the rotation of the screw rod 163, the third thread in the third through hole in the transmission rod 14 is mated with the fourth thread on the screw rod 163, so that the transmission rod 14 is slid on the screw rod 163, thereby driving the transmission rod 14 to move.

In the embodiments shown in FIG. 8 and FIG. 9, the transmission mechanism 16 may further include a limiting shaft 165 and a support 166. The support 166 is fixed to the electronic device, and the limiting shaft 165 is fixed to the support 166. A fourth through hole is further provided in the transmission rod 14. The limiting shaft 165 penetrates the fourth through hole in the transmission rod 14. During the movement of the transmission rod 14, the movement of the transmission rod 14 is always limited in a predetermined track by the limiting shaft 165, so that the movement of the transmission rod 14 does not deviate.

In the embodiments shown in FIG. 8 and FIG. 9, the gear assembly 162 includes a first gear 1621, a second gear 1622, a third gear 1623, and a fourth gear 1624. The first gear 1621 is disposed on the rotary shaft of the motor 161. The second gear 1622 is disposed on a first end of the screw rod 163. The first gear 1621 is meshed with the third gear 1623. The third gear 1623 is meshed with the fourth gear 1624. The fourth gear 1624 is meshed with the second gear 1622.

Certainly, a quantity of the gears in the gear assembly 162 may be set according to actual conditions. For example, the gear assembly 162 may also include only the first gear 1621 disposed on the rotary shaft of the motor 161 and the second gear 1622 disposed on the first end of the screw rod 163, and the first gear 1621 is meshed with the second gear 1622. In another example, the gear assembly 162 may have more gears according to actual conditions.

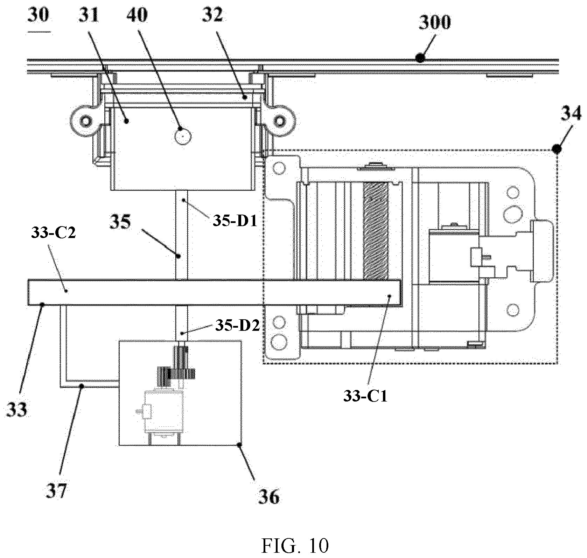

FIG. 10 is a schematic diagram of a camera assembly 30 according to an embodiment of this application. The camera assembly 30 is applicable to an electronic device 300. The electronic device 300 may be a large-screen device, a small-screen device, or a screenless device. For example, the large-screen device may be a device such as a smart television, a display, or a laptop, the small-screen device may be a device such as a smart phone or a tablet, and the screenless device may be a device such as a smart camera.

In an embodiment shown in FIG. 10, the camera assembly 30 includes a camera module 31, a guide rail 32, a transmission rod 33, a transmission mechanism 34, a transmission shaft 35, a rotary mechanism 36, and a connecting rod 37. A first end 33-C1 of the transmission rod 33 is connected to the transmission mechanism 34. A second end 33-C2 of the transmission rod 33 is connected to the rotary mechanism 36 by the connecting rod 37. A first end 35-D1 of the transmission shaft 35 is fixedly connected to the camera module 31. A second end 35-D2 of the transmission shaft 35 is connected to the rotary mechanism 36. A first through hole is provided in the transmission rod 33. The second end of the transmission shaft 35 penetrates the first through hole in the transmission rod 33 to be connected to the rotary mechanism 36. The camera assembly 30 further includes a guide rail 32 fixed to the electronic device 300. The guide rail 32 matches the camera module 31. The camera module 31 is slid on the guide rail 32 during movement from inside of the electronic device 300 to outside of the electronic device 300 in the first direction. When the transmission rod 33 is located between a first position and a second position, the guide rail 32 comes into contact with the camera module 31. When the transmission rod 33 is at the second position, the guide rail 32 is separated from the camera module 31.

In the embodiment shown in FIG. 10, after the transmission mechanism 34 drives the transmission rod 33 to move from the first position to the second position in the preset direction, the transmission rod 33 drives the rotary mechanism 36, the transmission shaft 35, and the camera module 31 to move in the preset direction. When the transmission rod 33 is at the second position, the rotary mechanism 36 can drive the camera module 31 to rotate by using the transmission shaft 35.

In the embodiment shown in FIG. 10, the transmission mechanism 34 may also drive the transmission rod 33 to move from the second position to the first position in a direction opposite to the preset direction. The preset direction and the direction opposite to the preset direction are directions in which the transmission rod 33 may be moved.

In the embodiment shown in FIG. 10, for a specific form of the transmission mechanism 34, refer to a composition and a connection relationship of the transmission mechanism 16 shown in FIG. 8 and FIG. 9.

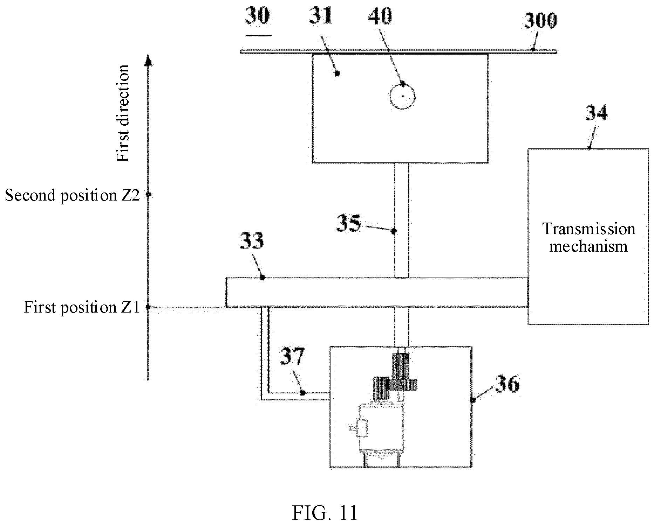

FIG. 11 is a schematic diagram of a camera assembly 30 in a first state according to an embodiment of this application. The first state of the camera assembly 30 shown in FIG. 11 is a state in which the transmission rod 33 of the camera assembly 30 is at a first position Z1. A first direction shown in FIG. 11 is the preset direction mentioned in the embodiment shown in FIG. 10.

In the embodiment shown in FIG. 11, it is assumed that a driving force of the transmission mechanism 34 in the first direction is F1, and a sum of gravity of the camera module 31, the transmission rod 33, the transmission shaft 35, the rotary mechanism 36, and the connecting rod 37 is F2. In this embodiment of this application, F1 > F2 is preset. In addition, the first direction in FIG. 11 is a direction from the transmission rod 33 to the camera module 31.

In the embodiment shown in FIG. 11, since F1 > F2, the transmission mechanism 34 can drive the transmission rod 33 to move from the first position Z1 to a second position Z2 in the first direction, and the transmission rod 33 can drive the camera module 31, the transmission shaft 35, the rotary mechanism 36, and the connecting rod 37 to move in the first direction.

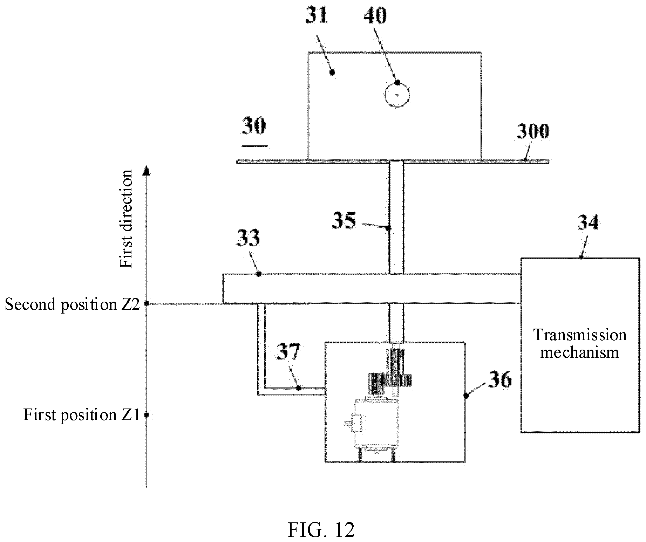

FIG. 12 is a schematic diagram of the camera assembly 30 in a second state according to an embodiment of this application. The second state of the camera assembly 30 shown in FIG. 12 is a state in which the transmission rod 33 of the camera assembly 30 is at the second position Z2. A first direction shown in FIG. 12 is the preset direction mentioned in the embodiment shown in FIG. 10.

In the embodiment shown in FIG. 12, when the transmission mechanism 34 drives the transmission rod 33 to move from the first position Z1 to the second position Z2 in the first direction, the transmission rod 33 drives the camera module 31 to move from the inside of the electronic device 300 to the outside of the electronic device 300 in the first direction by using the rotary mechanism 36 and the transmission shaft 35, so that a camera 40 inside the camera module 31 can perform photographing.

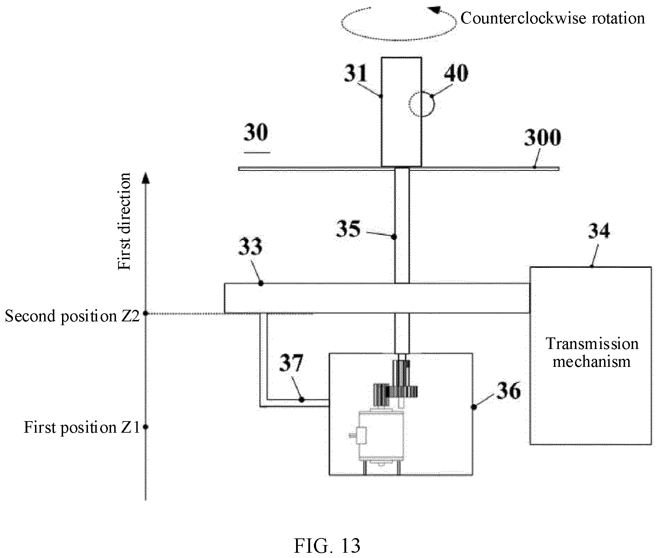

FIG. 13 is a schematic diagram of the camera assembly 30 in a third state according to an embodiment of this application. The third state of the camera assembly 30 shown in FIG. 13 is a state in which the camera module 31 is rotated to a preset angle. A first direction shown in FIG. 13 is the preset direction mentioned in the embodiment shown in FIG. 10.

In the embodiment shown in FIG. 13, when the transmission rod 33 is at the second position Z2, the rotary mechanism 36 can drive the camera module 31 to rotate counterclockwise by using the transmission shaft 35. In this case, the camera 40 in the camera module 31 can be rotated to different angles for photographing.

In the embodiment shown in FIG. 13, it is assumed that the rotary mechanism 36 drives the camera module 31 to rotate counterclockwise by 90 degrees by using the transmission shaft 35. Certainly, in this embodiment of this application, the rotary mechanism 36 may be controlled to adjust a rotation direction and a rotation angle of the camera module 31. For example, the rotary mechanism 36 may also be controlled, so that the camera module 31 can also be rotated clockwise by a predetermined angle, for example, 180 degrees, 270 degrees, or 360 degrees.

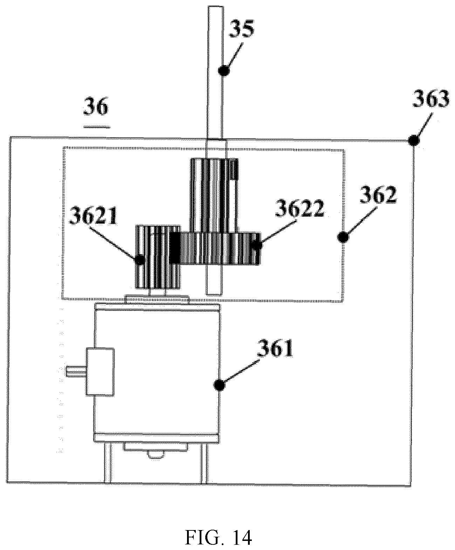

FIG. 14 is a schematic diagram of a rotary mechanism 36 of a camera assembly 30 according to an embodiment of this application. The rotary mechanism 36 includes a second motor 361, a second gear assembly 362, and a second support 363. The second motor 361 is fixed to the second support 363. The second support 363 is fixed to the transmission rod. A rotary shaft of the second motor 361 is connected to a second end of the transmission shaft 35 by the second gear assembly 362. The second gear assembly 362 includes a first gear 3621 and a second gear 3622. The first gear 3621 is disposed on the rotary shaft of the second motor 361. The second gear 3622 is disposed on the transmission shaft 35. The first gear 3621 is meshed with the second gear 3622.

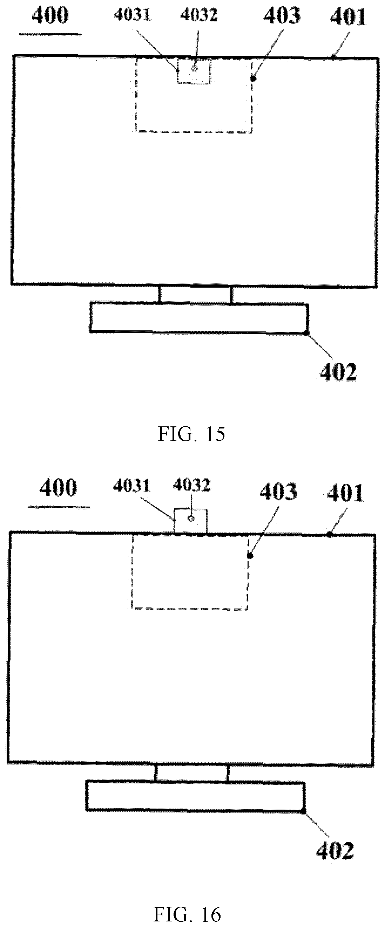

FIG. 15 is a schematic diagram of an electronic device 400 in a first state according to an embodiment of this application. The electronic device 400 includes a display screen 401, a support 402, and a camera assembly 403. The display screen 401 is connected to the support 402. The camera assembly 403 is disposed inside the display screen 401.

In the embodiment shown in FIG. 15, the camera assembly 403 may be the camera assembly 10 shown in FIG. 2 to FIG. 9, or may be the camera assembly 30 shown in FIG. 10 to FIG. 14. FIG. 15 shows only a camera module 4031 of the camera assembly 403. A camera 4032 is disposed in the camera module 4031.

In the embodiment shown in FIG. 15, the first state of the electronic device 400 shown in FIG. 15 is a state in which the camera module 4031 of the camera assembly 403 is located inside the display screen 401.

FIG. 16 is a schematic diagram of the electronic device 400 in a second state according to an embodiment of this application. The second state of the electronic device 400 shown in FIG. 16 is a state in which the camera module 4031 of the camera assembly 403 is located outside the display screen 401.

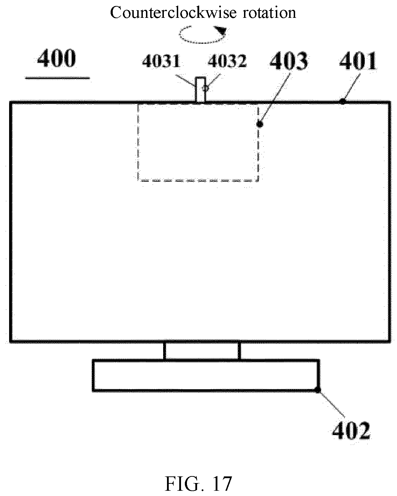

FIG. 17 is a schematic diagram of the electronic device 400 in a third state according to an embodiment of this application. The third state of the electronic device 400 shown in FIG. 17 is a state in which the camera module 4031 of the camera assembly 403 is located outside the display screen 401 and rotated counterclockwise. Certainly, the camera assembly 403 may also be adjusted to cause the camera module 4031 to be rotated clockwise, and adjust a rotation angle of the camera module 4031.

## Claims

1. A camera assembly (10), disposed on an electronic device (100) and comprising:
a camera module (11), a push block (12), an elastic component (13), a transmission rod (14), a transmission mechanism (16), a transmission shaft (15), and a limiting block (17), wherein
a first end (14-A1) of the transmission rod (14) is connected to the transmission mechanism (16), a second end (14-A2) of the transmission rod (14) is connected to a first end (12-B1) of the push block (12) by the elastic component (13), a second end (12-B2) of the push block (12) is configured for contact with the camera module (11), a first through hole is provided in the transmission rod (14), and a first thread is arranged in the first through hole;
a first end of the transmission shaft (15) is fixedly connected to the camera module (11), a second end of the transmission shaft (15) penetrates the first through hole in the transmission rod (14), a second thread is arranged on the transmission shaft (15), and the second thread on the transmission shaft (15) matches the first thread in the first through hole in the transmission rod (14);
the transmission mechanism (16) is configured to drive the transmission rod (14) to move from a first position (Y1) to a second position (Y2) in a preset direction along the transmission shaft (15), and the transmission rod (14) is configured to drive the push block (12) to move in the preset direction, until the push block (12) comes into contact with the limiting block (17) fixed to the electronic device (100), and drive the camera module (11) to move in the preset direction by using the elastic component (13) and the push block (12); and
the transmission mechanism (16) is configured to drive the transmission rod (14) to move from the second position (Y2) to a third position (Y3) in the preset direction, the transmission rod (14) is configured to drive the transmission shaft (15) to rotate under the influence of the sum of the gravity of the camera module (11) and the transmission shaft (15), and the transmission shaft (15) is configured to drive the camera module (11) to rotate.

2. The camera assembly (10) according to claim 1, wherein a second through hole is provided in the push block (12); and
the second end of the transmission shaft (15) penetrates the second through hole in the push block (12) and the first through hole in the transmission rod (14).

3. The camera assembly (10) according to claim 2, further comprising a baffle (18), wherein
the second end of the transmission shaft (15) is fixedly connected to the baffle (18); and
the transmission rod (14) is located between the push block (12) and the baffle (18).

4. The camera assembly (10) according to any one of claims 1 to 3, further comprising a guide rail (19) fixed to the electronic device (100), wherein the guide rail (19) matches the camera module (11);
when the transmission rod (14) is located between the first position (Y1) and the second position (Y2), the guide rail (19) comes into contact with the camera module (11); and
when the transmission rod (14) is located between the second position (Y2) and the third position (Y3), the guide rail (19) is separated from the camera module (11).

5. The camera assembly (10) according to any one of claims 1 to 3, wherein the elastic component (13) is a spring.

6. The camera assembly (10) according to any one of claims 1 to 3, wherein the transmission mechanism (16) comprises a motor (161), a gear assembly (162), and a screw rod (163), and a rotary shaft of the motor (161) is connected to the screw rod (163) by the gear assembly (162);
a third through hole is further provided in the transmission rod (14), and the screw rod (163) penetrates the third through hole in the transmission rod (14); and
a third thread is arranged in the third through hole in the transmission rod (14), a fourth thread is arranged on the screw rod (163), and the third thread in the third through hole in the transmission rod (14) matches the fourth thread on the screw rod (163).

7. The camera assembly (10) according to claim 6, wherein the transmission mechanism (16) further comprises a limiting shaft (165) and a support (166), the support (166) is fixed to the electronic device (100), and the limiting shaft (165) is fixed to the support (166); and
a fourth through hole is further provided in the transmission rod (14), and the limiting shaft (165) penetrates the fourth through hole in the transmission rod (14).

8. The camera assembly (10) according to claim 6, wherein the gear assembly (162) comprises a first gear (1621), a second gear (1622), a third gear, and a fourth gear; and
the first gear (1621) is disposed on the rotary shaft of the motor (161), the second gear (1622) is disposed on a first end of the screw rod (163), the first gear (1621) is meshed with the third gear, the third gear is meshed with the fourth gear, and the fourth gear is meshed with the second gear (1622).

9. An electronic device (100), comprising: the camera assembly (10) according to any one of claims 1 to 8.

## Patentansprüche

1. Kameraanordnung (10), die auf einer elektronischen Vorrichtung (100) eingerichtet ist und umfassend:
ein Kameramodul (11), einen Druckblock (12), eine elastische Komponente (13), eine Übertragungsstange (14), einen Übertragungsmechanismus (16), eine Übertragungswelle (15) und einen Begrenzungsblock (17), wobei
ein erstes Ende (14-A1) der Übertragungsstange (14) mit dem Übertragungsmechanismus (16) verbunden ist, ein zweites Ende (14-A2) der Übertragungsstange (14) durch die elastische Komponente (13) mit einem ersten Ende (12-B1) des Druckblocks (12) verbunden ist, ein zweites Ende (12-B2) des Druckblocks (12) für den Kontakt mit dem Kameramodul (11) konfiguriert ist, ein erstes Durchgangsloch in der Übertragungsstange (14) bereitgestellt ist und ein erstes Gewinde in dem ersten Durchgangsloch angebracht ist;
ein erstes Ende der Übertragungswelle (15) fest mit dem Kameramodul (11) verbunden ist, ein zweites Ende der Übertragungswelle (15) das erste Durchgangsloch in der Übertragungsstange (14) durchdringt, ein zweites Gewinde auf der Übertragungswelle (15) angebracht ist und das zweite Gewinde auf der Übertragungswelle (15) mit dem ersten Gewinde in dem ersten Durchgangsloch in der Übertragungsstange (14) übereinstimmt;
der Übertragungsmechanismus (16) konfiguriert ist, um die Übertragungsstange (14) anzutreiben, um sich von einer ersten Position (Y1) in eine zweite Position (Y2) in einer voreingestellten Richtung entlang der Übertragungswelle (15) zu bewegen, und die Übertragungsstange (14) konfiguriert ist, um den Druckblock (12) anzutreiben, um sich in der voreingestellten Richtung zu bewegen, bis der Druckblock (12) mit dem Begrenzungsblock (17) in Kontakt kommt, der an der elektronischen Vorrichtung (100) befestigt ist, und das Kameramodul (11) anzutreiben, um sich in der voreingestellten Richtung durch Verwenden der elastischen Komponente (13) und des Druckblocks (12) zu bewegen; und
der Übertragungsmechanismus (16) konfiguriert ist, um die Übertragungsstange (14) anzutreiben, um sich von der zweiten Position (Y2) in eine dritte Position (Y3) in der voreingestellten Richtung zu bewegen, wobei die Übertragungsstange (14) konfiguriert ist, um die Übertragungswelle (15) anzutreiben, um sich unter dem Einfluss der Summe der Schwerkraft des Kameramoduls (11) und der Übertragungswelle (15) zu drehen, und die Übertragungswelle (15) konfiguriert ist, um das Kameramodul (11) anzutreiben, um sich zu drehen.

2. Kameraanordnung (10) nach Anspruch 1, wobei ein zweites Durchgangsloch in dem Druckblock (12) bereitgestellt ist; und
das zweite Ende der Übertragungswelle (15) das zweite Durchgangsloch in dem Druckblock (12) und das erste Durchgangsloch in der Übertragungsstange (14) durchdringt.

3. Kameraanordnung (10) nach Anspruch 2, ferner umfassend ein Leitblech (18), wobei
das zweite Ende der Übertragungswelle (15) fest mit dem Leitblech (18) verbunden ist; und
sich die Übertragungsstange (14) zwischen dem Druckblock (12) und dem Leitblech (18) befindet.

4. Kameraanordnung (10) nach einem der Ansprüche 1 bis 3, ferner umfassend eine Führungsschiene (19), die an der elektronischen Vorrichtung (100) befestigt ist, wobei die Führungsschiene (19) mit dem Kameramodul (11) übereinstimmt;
wobei wenn sich die Übertragungsstange (14) zwischen der ersten Position (Y1) und der zweiten Position (Y2) befindet, die Führungsschiene (19) mit dem Kameramodul (11) in Kontakt kommt; und
wobei wenn sich die Übertragungsstange (14) zwischen der zweiten Position (Y2) und der dritten Position (Y3) befindet, die Führungsschiene (19) von dem Kameramodul (11) getrennt wird.

5. Kameraanordnung (10) nach einem der Ansprüche 1 bis 3, wobei die elastische Komponente (13) eine Feder ist.

6. Kameraanordnung (10) nach einem der Ansprüche 1 bis 3, wobei der Übertragungsmechanismus (16) einen Motor (161), eine Getriebeanordnung (162) und eine Schraubenspindel (163) umfasst und eine Drehwelle des Motors (161) durch die Getriebeanordnung (162) mit der Schraubenspindel (163) verbunden ist;
ein drittes Durchgangsloch ferner in der Übertragungsstange (14) bereitgestellt ist und die Schraubenspindel (163) das dritte Durchgangsloch in der Übertragungsstange (14) durchdringt; und
ein drittes Gewinde in dem dritten Durchgangsloch in der Übertragungsstange (14) angebracht ist, ein viertes Gewinde auf der Schraubenspindel (163) angebracht ist und das dritte Gewinde in dem dritten Durchgangsloch in der Übertragungsstange (14) mit dem vierten Gewinde auf der Schraubenspindel (163) übereinstimmt.

7. Kameraanordnung (10) nach Anspruch 6, wobei der Übertragungsmechanismus (16) ferner eine Begrenzungswelle (165) und einen Träger (166) umfasst, wobei der Träger (166) an der elektronischen Vorrichtung (100) befestigt ist und die Begrenzungswelle (165) an dem Träger (166) befestigt ist; und
ein viertes Durchgangsloch ferner in der Übertragungsstange (14) bereitgestellt ist und die Begrenzungswelle (165) das vierte Durchgangsloch in der Übertragungsstange (14) durchdringt.

8. Kameraanordnung (10) nach Anspruch 6, wobei die Getriebeanordnung (162) ein erstes Zahnrad (1621), ein zweites Zahnrad (1622), ein drittes Zahnrad und ein viertes Zahnrad umfasst; und das erste Zahnrad (1621) auf der Drehwelle des Motors (161) eingerichtet ist, das zweite Zahnrad (1622) an einem ersten Ende der Schraubenspindel (163) eingerichtet ist, wobei das erste Zahnrad (1621) mit dem dritten Zahnrad in Eingriff steht, das dritte Zahnrad mit dem vierten Zahnrad in Eingriff steht und das vierte Zahnrad mit dem zweiten Zahnrad (1622) in Eingriff steht.

9. Elektronische Vorrichtung (100), umfassend: die Kameraanordnung (10) nach einem der Ansprüche 1 bis 8.

## Revendications

1. Ensemble caméra (10), disposé sur un dispositif électronique (100) et comprenant :
un module de caméra (11), un bloc poussoir (12), un composant élastique (13), une tige de transmission (14), un mécanisme de transmission (16), un arbre de transmission (15) et un bloc de limitation (17), dans lequel
une première extrémité (14-A1) de la tige de transmission (14) est reliée au mécanisme de transmission (16), une seconde extrémité (14-A2) de la tige de transmission (14) est reliée à une première extrémité (12-B1) du bloc poussoir (12) par le composant élastique (13), une seconde extrémité (12-B2) du bloc poussoir (12) est configurée pour être en contact avec le module caméra (11), un premier trou traversant est prévu dans la tige de transmission (14), et un premier filetage est agencé dans le premier trou traversant ;
une première extrémité de l'arbre de transmission (15) est reliée de manière fixe au module de caméra (11), une seconde extrémité de l'arbre de transmission (15) pénètre dans le premier trou traversant dans la tige de transmission (14), un deuxième filetage est agencé sur l'arbre de transmission (15), et le deuxième filetage sur l'arbre de transmission (15) correspond au premier filetage dans le premier trou traversant dans la tige de transmission (14) ;
le mécanisme de transmission (16) est configuré pour entraîner la tige de transmission (14) pour se déplacer d'une première position (Y1) à une deuxième position (Y2) dans une direction prédéfinie le long de l'arbre de transmission (15), et la tige de transmission (14) est configurée pour entraîner le bloc poussoir (12) pour se déplacer dans la direction prédéfinie, jusqu'à ce que le bloc poussoir (12) entre en contact avec le bloc de limitation (17) fixé au dispositif électronique (100), et entraîner le module de caméra (11) pour se déplacer dans la direction prédéfinie en utilisant le composant élastique (13) et le bloc poussoir (12) ; et
le mécanisme de transmission (16) est configuré pour entraîner la tige de transmission (14) pour se déplacer de la deuxième position (Y2) à une troisième position (Y3) dans la direction prédéfinie, la tige de transmission (14) est configurée pour entraîner l'arbre de transmission (15) pour tourner sous l'influence de la somme de la gravité du module de caméra (11) et de l'arbre de transmission (15), et l'arbre de transmission (15) est configuré pour entraîner le module de caméra (11) pour tourner.

2. Ensemble caméra (10) selon la revendication 1, dans lequel un deuxième trou traversant est prévu dans le bloc poussoir (12) ; et
la seconde extrémité de l'arbre de transmission (15) pénètre dans le deuxième trou traversant dans le bloc poussoir (12) et le premier trou traversant dans la tige de transmission (14).

3. Ensemble caméra (10) selon la revendication 2, comprenant en outre un déflecteur (18), dans lequel
la seconde extrémité de l'arbre de transmission (15) est reliée de manière fixe au déflecteur (18) ; et
la tige de transmission (14) est située entre le bloc poussoir (12) et le déflecteur (18).

4. Ensemble caméra (10) selon l'une quelconque des revendications 1 à 3, comprenant en outre un rail de guidage (19) fixé au dispositif électronique (100), dans lequel le rail de guidage (19) correspond au module de caméra (11) ;
lorsque la tige de transmission (14) est située entre la première position (Y1) et la deuxième position (Y2), le rail de guidage (19) vient en contact avec le module de caméra (11) ; et
lorsque la tige de transmission (14) est située entre la deuxième position (Y2) et la troisième position (Y3), le rail de guidage (19) est séparé du module de caméra (11).

5. Ensemble caméra (10) selon l'une quelconque des revendications 1 à 3, dans lequel le composant élastique (13) est un ressort.

6. Ensemble caméra (10) selon l'une quelconque des revendications 1 à 3, dans lequel le mécanisme de transmission (16) comprend un moteur (161), un ensemble d'engrenages (162) et une tige de vis (163), et un arbre rotatif du moteur (161) est relié à la tige de vis (163) par l'ensemble d'engrenages (162) ;
un troisième trou traversant est en outre prévu dans la tige de transmission (14), et la tige de vis (163) pénètre dans le troisième trou traversant dans la tige de transmission (14) ; et
un troisième filetage est agencé dans le troisième trou traversant dans la tige de transmission (14), un quatrième filetage est agencé sur la tige de vis (163), et le troisième filetage dans le troisième trou traversant dans la tige de transmission (14) correspond au quatrième filetage sur la tige de vis (163).

7. Ensemble caméra (10) selon la revendication 6, dans lequel le mécanisme de transmission (16) comprend en outre un arbre de limitation (165) et un support (166), le support (166) est fixé au dispositif électronique (100), et l'arbre de limitation (165) est fixé au support (166) ; et
un quatrième trou traversant est en outre prévu dans la tige de transmission (14), et l'arbre de limitation (165) pénètre dans le quatrième trou traversant dans la tige de transmission (14).

8. Ensemble caméra (10) selon la revendication 6, dans lequel l'ensemble d'engrenages (162) comprend un premier engrenage (1621), un deuxième engrenage (1622), un troisième engrenage et un quatrième engrenage ; et
le premier engrenage (1621) est disposé sur l'arbre rotatif du moteur (161), le deuxième engrenage (1622) est disposé sur une première extrémité de la tige de vis (163), le premier engrenage (1621) est engrené avec le troisième engrenage, le troisième engrenage est engrené avec le quatrième engrenage, et le quatrième engrenage est engrené avec le deuxième engrenage (1622).

9. Dispositif électronique (100), comprenant : l'ensemble caméra (10) selon l'une quelconque des revendications 1 à 8.
